# EUROPÄISCHE PATENTSCHRIFT

(11) **EP 2 801 725 B1**
(45) Veröffentlichungstag und Bekanntmachung des Hinweises auf die Patenterteilung: **12.02.2020**
(21) Anmeldenummer: 14163489.9
(22) Anmeldetag: 04.04.2014
(51) Int. Cl.: F04D 19/04, F04D 29/40, F04D 29/52, F04D 29/08, F04D 29/62, F04D 29/64

(54) **Vorrichtung mit mindestens einem Kanal zum Führen eines gasförmigen oder flüssigen Betriebsmittels**
Device with at least one channel for guiding a gaseous or liquid working medium
Dispositif comprenant au moins un canal pour l'acheminement d'un fluide de travail gazeux ou liquide

(30) Priorität: 10.05.2013 DE 102013208614
(43) Veröffentlichungstag der Anmeldung: 12.11.2014
(73) Patentinhaber: PFEIFFER VACUUM GMBH, 35614 Asslar (DE)
(72) Erfinder: Stammler, Herbert, 35396 Gießen (DE); Gilbrich, Sönke, 35753 Greifenstein (DE)
(74) Vertreter: Manitz Finsterwald Patent- und Rechtsanwaltspartnerschaft mbB

(56) Entgegenhaltungen:
- EP-A1- 2 292 953
- DE-A1-102009 018 212
- DE-U1-202004 018 733
- JP-A- H05 263 809
- JP-A- H08 254 273
- JP-A- 2001 141 057

## Beschreibung

Die Erfindung betrifft eine Vorrichtung mit zumindest einem Kanal zum Führen eines gasförmigen oder flüssigen Betriebsmittels, insbesondere in einer Vakuumpumpe. Die Erfindung betrifft ferner ein Verfahren zur Herstellung einer Vorrichtung mit zumindest einem Kanal zum Führen eines gasförmigen oder flüssigen Betriebsmittels.

Der Betrieb vieler technischer Geräte wie zum Beispiel der Betrieb von Vakuumpumpen erfordert den Einsatz eines gasförmigen oder flüssigen Betriebsmittels und eine gezielte und kontrollierte Führung des Betriebsmittels innerhalb des Geräts. Beispielsweise kann der energieeffiziente Betrieb einer Vakuumpumpe die ständige Versorgung eines Wälzlagers der Vakuumpumpe mit einem Schmiermittel erfordern. Derartige technische Geräte umfassen deshalb eine Vorrichtung mit einem ersten und einem zweiten Bauteil, die einen Kanal zum Führen des gasförmigen oder flüssigen Betriebsmittels bilden. In einer Seite des ersten Bauteils ist dazu eine Nut vorgesehen, deren Längsverlauf dem gewünschten Kanalverlauf entspricht. Das zweite Bauteil ist mit dem ersten Bauteil verbunden und deckt die die Nut aufweisende Seite des ersten Bauteils nach der Art eines Deckels vollflächig ab, so dass die Nut durch das zweite Bauteil zur Bildung des Kanals verschlossen ist.

Um die Nut zuverlässig zu verschließen, muss das zweite Bauteil über die gesamte Oberfläche hinweg, welche die Seite des ersten Bauteils abdeckt, in der die Nut ausgebildet ist, genau komplementär zu dem ersten Bauteil ausgestaltet und relativ zu dem ersten Bauteil genau richtig positioniert und an diesem fixiert sein.

Das Erfordernis der hochpräzisen Anpassung der beiden Bauteile aneinander verringert die zulässigen Herstellungstoleranzen und erhöht die Komplexität der Herstellung und Montage einer solchen Vorrichtung. Die Herstellung und Montage der Vorrichtung ist daher mit einem hohen Zeit- und Kostenaufwand verbunden.

Aus der EP 2 292 953 A1 und aus der JPH 08 254 273 A sind eine Vorrichtung mit zumindest einem Kanal zum Führen eines gasförmigen oder flüssigen Betriebsmittels und ein Verfahren zum Herstellen einer solchen Vorrichtung gemäß dem Oberbegriff der unabhängigen Ansprüche bekannt.

Die DE 10 2009 018 212 A1 beschreibt ebenfalls eine Vorrichtung mit zumindest einem Kanal zum Führen eines gasförmigen oder flüssigen Betriebsmittels, bei der jedoch ein Kühlkanal mit einer flächigen Dichtung bedeckt wird.

Es ist eine Aufgabe der Erfindung, eine Vorrichtung mit zumindest einem Kanal zum Führen eines gasförmigen oder flüssigen Betriebsmittels anzugeben, welche mit verringertem Aufwand bereitgestellt werden kann, sowie ein Verfahren zur Herstellung einer Vorrichtung mit zumindest einem Kanal zum Führen eines gasförmigen oder flüssigen Betriebsmittels, welches mit verringertem Aufwand durchgeführt werden kann.

Die Aufgabe wird durch eine Vorrichtung mit den Merkmalen des Anspruchs 1 gelöst. Die Vorrichtung umfasst zumindest einen Kanal zum Führen eines gasförmigen oder flüssigen Betriebsmittels, insbesondere in einer Vakuumpumpe. Der Kanal ist an einer Seite durch wenigstens ein langgestrecktes, dem Verlauf des Kanals folgendes Dichtmittel fluiddicht verschlossen.

Anstelle eines deckelartigen Bauteils, welches ein Bauteil, das eine Nut für den Kanal aufweist, über dessen gesamte die Nut aufweisende Seite hinweg abdeckt, wird also ein langgestrecktes Dichtmittel verwendet, welches dem Verlauf des Kanals folgt. Somit ist es nicht erforderlich, ein deckelartiges Bauteil herzustellen, welches über die gesamte die Nut aufweisende Seite eines anderen Bauteils hinweg genau komplementär zu diesem Bauteil ausgebildet ist. Stattdessen ist nur im Bereich des Kanals selbst ein passendes Dichtmittel angeordnet, d.h. unmittelbar dort, wo eine Dichtwirkung erforderlich ist. Die Bereitstellung und Montage eines solchen Dichtmittels ist mit geringem Aufwand möglich, so dass der für die Herstellung der Vorrichtung erforderliche Aufwand deutlich reduziert ist.

Erfindungsgemäß ist das Dichtmittel durch Wandungsabschnitte eines den Kanal begrenzenden Bauteils gebildet, die durch Verformung zur Anlage aneinander gebracht sind. Das Dichtmittel ist also nicht durch ein separates Dichtelement gebildet, sondern durch aneinander zur Anlage gebrachte Abschnitte des den Kanal begrenzenden Bauteils selbst, wobei sich die Wandungsabschnitte vorzugsweise materialeinheitlich an die benachbarten, den Kanal begrenzenden Bereiche des Bauteils anschließen. Die Bereitstellung des Dichtmittels erfordert somit nicht die Bereitstellung und Montage eines separaten Dichtelements. Die Wandungsabschnitte können unter einer Vorspannung aneinander anliegen, welche durch eine elastische Verformung des Bauteils hervorgerufen sein kann, um einen besonders zuverlässigen und dichten Verschluss des Kanals zu gewährleisten.

Vorteilhafte Ausführungsformen der Erfindung sind in den Unteransprüchen, der Beschreibung und den Figuren beschrieben.

Gemäß einer Ausführungsform ist das Dichtmittel zumindest bereichsweise elastisch verformbar ausgebildet und/oder ist das Dichtmittel zumindest bereichsweise plastisch verformbar ausgebildet. Dadurch wird die Herstellung der Vorrichtung noch weiter erleichtert, da kein Dichtmittel hergestellt werden muss, welches exakt der Form der abzudichtenden Kanalöffnung entspricht, sondern das Dichtmittel stattdessen im Zuge der Herstellung so elastisch und/oder plastisch verformt werden kann, dass es die erforderliche Form annimmt.

Vorzugsweise weist der Kanal zumindest bereichsweise einen geschlossenen Querschnitt auf. Dadurch wird ein unerwünschtes Austreten des Betriebsmittels aus dem Kanal verhindert. Der Kanal kann über seine gesamte Länge oder über zumindest annähernd seine gesamte Länge einen geschlossenen Querschnitt aufweisen.

Gemäß einem Beispiel, das nicht in den Schutzbereich der Ansprüche fällt, ist das Dichtmittel durch ein separates Dichtelement gebildet, welches gemeinsam mit einem Bauteil der Vorrichtung den Kanal begrenzt. Das separate Dichtelement kann dem Bauteil als vorgefertigtes Element hinzugefügt worden sein. Das separate Dichtelement kann auch durch einen z.B. Silikon enthaltenden Dichtstoff gebildet sein, welcher dem Bauteil in einem fließfähigen Zustand hinzugefügt wurde und daraufhin zu dem Dichtelement verfestigt bzw. ausgehärtet wurde.

Bevorzugt weist das Bauteil eine Nut auf, wobei zumindest ein Bereich der Nut durch das Dichtelement verschlossen ist und wobei der Kanal durch den verschlossenen Bereich der Nut gebildet ist und durch die Nutwandung und das Dichtelement fluiddicht begrenzt ist. Dadurch werden ein einfacher Aufbau und eine einfache Herstellbarkeit der Vorrichtung erreicht.

Gemäß einem weiteren Beispiel, das nicht in den Schutzbereich der Ansprüche fällt, ist vorgesehen, dass das Dichtelement zumindest bereichsweise innerhalb der Nut angeordnet ist. Durch ein entsprechendes Zusammenwirken mit der Nutwandung lässt sich dabei in einfacher Weise eine besonders stabile und dichte Verbindung zwischen dem Bauteil und dem Dichtelement schaffen. Der Kanal kann durch einen Teilbereich der Nut gebildet sein, während ein anderer Teilbereich der Nut das Dichtelement aufnimmt. Das Dichtelement kann zumindest längsabschnittsweise oder über seine gesamte Länge vollständig innerhalb der Nut angeordnet sein. Dadurch wird eine geschützte Anordnung des Dichtelements gewährleistet.

Ein weiteres Beispiel, das nicht in den Schutzbereich der Ansprüche fällt, sieht vor, dass das Dichtelement die Nutöffnung zumindest bereichsweise überdeckt. Das Dichtelement kann die Nutöffnung zumindest längsabschnittsweise vollständig überdecken, wobei der Kanal über die entsprechende Nutlänge hinweg das gesamte Nutinnere umfassen kann.

Gemäß einem weiteren Beispiel, das nicht in den Schutzbereich der Ansprüche fällt, ist das Dichtelement, insbesondere beidseitig der Nut, mit der Nutwandung und/oder mit dem Nutrand verbunden. Ein mit der Nutwandung verbundenes Dichtelement kann zumindest bereichsweise innerhalb der Nut angeordnet sein. Ein mit dem Nutrand verbundenes Dichtelement kann die Nutöffnung zumindest bereichsweise überdecken. Die Verbindung zwischen dem Dichtelement und der Nutwandung und/oder dem Nutrand kann zum Beispiel materialschlüssig, kraftschlüssig und/oder formschlüssig sein, wobei die kraftschlüssige Verbindung eine reibschlüssige Verbindung sein kann. Bevorzugt ist das Dichtelement fluiddicht mit der Nutwandung und/oder mit dem Nutrand verbunden.

Gemäß einem weiteren Beispiel, das nicht in den Schutzbereich der Ansprüche fällt, kann eine materialschlüssige Verbindung zwischen dem Bauteil und dem Dichtelement zum Beispiel durch eine klebewirksame Verbindung oder eine Schweißverbindung gebildet sein. Das Dichtelement kann zum Beispiel durch einen zusätzlichen Klebstoff mit dem Bauteil verbunden sein oder das Dichtelement kann selbst unmittelbar eine klebewirksame Verbindung mit dem Bauteil eingehen.

Gemäß einem weiteren Beispiel, das nicht in den Schutzbereich der Ansprüche fällt, kann eine kraftschlüssige Verbindung dadurch gebildet sein, dass das Dichtelement und das Bauteil unter einer Vorspannung aneinander anliegen, wobei die Vorspannung vorzugsweise durch eine elastische Verformung des Dichtelements und/oder des Bauteils durch das jeweils andere Element hervorgerufen wird. Das Dichtelement kann dabei gegenüber einer Aufnahme des Bauteils, in der das Dichtelement angeordnet ist, ein Übermaß aufweisen. Das Dichtelement ist vorzugsweise mit dem Bauteil verklemmt oder in einer Aufnahme des Bauteils eingeklemmt.

Gemäß einem vorteilhaften Beispiel, das nicht in den Schutzbereich der Ansprüche fällt, ist das Dichtelement zumindest bereichsweise in der Nut eingeklemmt. Dadurch kann eine einfach herstellbare, sowohl mechanisch besonders feste als auch fluiddichte, kraftschlüssige Verbindung zwischen dem Dichtelement und dem Bauteil geschaffen werden. Das Dichtelement kann auf beiden Seiten der Nut mit der Nutwandung in kraftschlüssigem Kontakt stehen.

Gemäß einem weiteren Beispiel, das nicht in den Schutzbereich der Ansprüche fällt, kann eine formschlüssige Verbindung gleichzeitig in alle Richtungen oder zumindest in allen senkrecht zu der Längserstreckung des Kanals orientierten Richtungen wirksam sein. Vorzugsweise ist die formschlüssige Verbindung zumindest in der von dem Nutinneren zu der Nutöffnung des Kanals weisenden Richtung wirksam, um ein ungewolltes Entfernen des Dichtelements von dem Bauteil in dieser Richtung zu verhindern. Zur Bildung der formschlüssigen Verbindung kann das Dichtelement mit dem Bauteil eine in der jeweiligen Richtung bzw. in den jeweiligen Richtungen wirksame Hinterschneidung bilden.

Gemäß einem weiteren vorteilhaften Beispiel, das nicht in den Schutzbereich der Ansprüche fällt, weist das Bauteil wenigstens eine in der Nutwandung ausgebildete Aussparung auf, in die das Dichtelement eingreift. Dadurch kann eine formschlüssige Verbindung zwischen dem Dichtelement und dem Bauteil geschaffen werden, welche insbesondere in der Richtung von dem Nutinneren zu der Nutöffnung hin wirksam ist und ein Entfernen des Dichtelements in dieser Richtung verhindert. Die Aussparung kann beidseitig der Nut ausgebildet sein und das Dichtelement kann beidseitig der Nut in die Aussparung eingreifen.

Das Dichtelement kann durch eine kraftschlüssige und gleichzeitig formschlüssige Verbindung mit dem Bauteil verbunden sein. Beispielsweise kann das Dichtelement in eine in der Nutwandung ausgebildete Aussparung des Bauteils eingreifen und mit dem die Aussparung bildenden Abschnitt der Nutwandung gleichzeitig in kraftschlüssigem Kontakt stehen.

Gemäß einem weiteren Beispiel, das nicht in den Schutzbereich der Ansprüche fällt, kann das. Dichtelement elastisch und/oder plastisch verformbar ausgebildet sein bzw. ein elastisch und/oder plastisch verformbares Material enthalten oder daraus bestehen. Ein elastisch verformbares Dichtelement kann z.B. mit dem Bauteil in Kontakt stehen und durch das Bauteil unter Bildung einer wie vorstehend beschriebenen kraftschlüssigen Verbindung elastisch verformt sein. Eine elastische und/oder plastische Verformbarkeit erleichtert auch die Herstellung einer wie vorstehend beschriebenen formschlüssigen Verbindung zwischen dem Dichtelement und dem Bauteil. Das Dichtelement kann dann z.B. in einem ersten Form- bzw. Verformungszustand durch die Nutöffnung in die Nut des Bauteils eingebracht werden und kann anschließend, durch elastische Rückstellung oder plastische Verformung, einen zweiten Verformungszustand annehmen, in dem es mit dem Bauteil eine z.B. in Richtung zu der Nutöffnung hin wirksame Hinterschneidung bildet.

Gemäß einem weiteren Beispiel, das nicht in den Schutzbereich der Ansprüche fällt, kann das Dichtelement einen, insbesondere elastisch verformbaren, Kunststoff wie z.B. einen elastomeren Kunststoff enthalten oder daraus bestehen. Das Dichtelement kann auch ein metallisches Material enthalten oder daraus bestehen, welches vorzugsweise elastisch und/oder plastisch verformbar ist.

Gemäß einem weiteren Beispiel, das nicht in den Schutzbereich der Ansprüche fällt, weist das Dichtelement zumindest über einen Teil seiner Länge senkrecht zu seiner Längsrichtung eine kreisförmige Querschnittsform, eine ovale Querschnittsform, eine ringförmig geschlossene Querschnittsform oder eine langgestreckte Querschnittsform auf. Diese Querschnittsformen eignen sich besonders gut für eine elastische und/oder plastisch verformbare Ausgestaltung des Dichtelements oder zur Bildung einer kraft- und/oder formschlüssigen Verbindung des Dichtelements mit dem Bauteil.

Gemäß einem weiteren Beispiel, das nicht in den Schutzbereich der Ansprüche fällt, ist das Dichtelement durch einen O-Ring, eine Dichtschnur, ein Rohr oder ein Blechprofil gebildet. Bei einem O-Ring handelt es sich um ein besonders geeignetes und kostengünstig verfügbares Dichtelement. Der O-Ring kann ringförmig geschlossen ausgebildet sein. Es kann auch ein quer zu seiner Längserstreckung durchgeschnittener O-Ring oder ein Ausschnitt eines O-Rings verwendet werden, welcher nicht ringförmig geschlossen ist, sondern z.B. ringsegmentförmig ausgebildet ist. Bei einer Dichtschnur handelt es sich um ein Dichtelement mit zwei Längsenden, welches besonders zum Verschließen von langgestreckten Kanälen mit freien Längsenden geeignet ist. Die Dichtschnur kann eine geringe Biegesteifigkeit aufweisen. Dies hat den Vorteil, dass die Dichtschnur nicht in einer der Längsform des Kanals entsprechenden Form vorgefertigt werden muss, sondern bei der Herstellung der Vorrichtung ohne großen Aufwand durch entsprechendes Verbiegen bzw. Verwinden an den Kanalverlauf angepasst werden kann, beispielsweise indem die Dichtschnur in die den Kanal bildende Nut eingesetzt wird.

Gemäß einem weiteren Beispiel, das nicht in den Schutzbereich der Ansprüche fällt, kann der O-Ring oder die Dichtschnur einen zumindest näherungsweise kreisförmigen, ovalen, kreisringförmigen oder ovalringförmigen Querschnitt aufweisen. Der O-Ring oder die Dichtschnur kann aus einem insbesondere elastomeren Kunststoff oder einem anderen elastischen Material gebildet sein.

Gemäß einem weiteren Beispiel, das nicht in den Schutzbereich der Ansprüche fällt, kann ein Rohr oder Blechprofil ein metallisches Material enthalten oder daraus bestehen, welches vorzugsweise plastisch verformbar ist. Unter einem Blechprofil wird ein flächiges Profil mit einer beliebigen langgestreckten Querschnittsform verstanden. Aufgrund seines langgestreckten Querschnitts kann ein solches Blechprofil besonders stark plastisch verformt werden. Beispielsweise kann ein Rohr oder ein Blechprofil mit einem U-förmigen Querschnitt oder ein anderes räumliches Blechprofil verwendet werden.

Gemäß einem weiteren Beispiel, das nicht in den Schutzbereich der Ansprüche fällt, kann das Dichtelement auch durch einen fest gewordenen bzw. ausgehärteten Dichtstoff gebildet sein, welcher z.B. bereichsweise in dem Kanal angeordnet ist und/oder die Öffnung der Nut des Bauteils zumindest bereichsweise überdeckt und, vorzugsweise beidseitig der Nut, mit dem Nutrand verbunden ist. Das Dichtelement kann auch ein elastisch verformbares selbstklebendes Dichtelement wie zum Beispiel ein Klebeband sein, welches zum Beispiel, insbesondere beidseitig der Nut, mit dem Nutrand verklebt ist und die Nutöffnung überdeckt.

Das Dichtmittel und/oder der Kanal kann gemäß einer Ausführungsform der Erfindung ringförmig ausgebildet sein. Ein ringförmiger Kanal ist in vielen Anwendungsfällen gewünscht, um eine ringförmige Führung des Betriebsmittels zu gewährleisten. Ein ringförmiges Dichtmittel eignet sich zur Abdichtung eines solchen ringförmigen Kanals.

Gemäß einer weiteren Ausführungsform weist der Kanal wenigstens ein Längsende auf, an dem der Kanal vorzugsweise durch das Dichtmittel fluiddicht verschlossen ist. Auch wenn an dem Längsende ein Einlass und/oder Auslass des Kanals vorgesehen ist, zum Beispiel als Abgriff und/oder als Umleitung für das Betriebsmittel, ist es bevorzugt, wenn der Kanal an dem Längsende durch das Dichtmittel fluiddicht verschlossen ist und das Dichtmittel nicht zur Bildung des Einlasses bzw. Auslasses unterbrochen ist. Stattdessen kann der Einlass bzw. Auslass durch eine von dem Dichtmittel unabhängige Öffnung des Bauteils gebildet sein, die in den Kanal mündet, beispielsweise eine seitliche Bohrung des Bauteils. Wenn der Kanal durch eine Nut des Bauteils gebildet ist, kann an dem jeweiligen Längsende eine die Nut verengende oder beendende Geometrie vorgesehen sein, die mit Hilfe des Dichtmittels den Kanal fluiddicht verschließt.

Gemäß einer Ausführungsform ist die Vorrichtung eine Vakuumpumpe oder eine Komponente einer Vakuumpumpe. Die Erfindung betrifft demnach auch eine durch die Vorrichtung gebildete Vakuumpumpe bzw. eine Vakuumpumpe, die die Vorrichtung umfasst. Es hat sich gezeigt, dass sich die Vorrichtung hervorragend zur Führung eines Betriebsmittels in einer Vakuumpumpe eignet, da sie kostengünstig herstellbar ist, vakuumkompatibel ausgestaltet werden kann und eine besonders hohe Dichtheit und mechanische und thermische Beständigkeit aufweist.

Das Betriebsmittel kann z.B. ein Schmiermittel, ein Kühlmittel wie z.B. Kühlwasser, ein Sperrgas, ein Flutgas oder ein Prozessgas sein, insbesondere wenn die Vorrichtung eine Vakuumpumpe oder eine Komponente einer Vakuumpumpe ist. Der Kanal ist bevorzugt zumindest teilweise mit dem Betriebsmittel gefüllt. Das Dichtmittel dichtet den Kanal fluiddicht ab, so dass ein Austreten des Betriebsmittels durch das Dichtmittel verhindert wird.

Der Kanal kann z.B. zur Führung eines Schmiermittels dienen, welches einem Drehlager, insbesondere einem Wälzlager, zuführbar ist, welches z.B. eine Rotorwelle einer Vakuumpumpe drehbar unterstützt. Der Kanal kann Teil eines Schmiermittelkreislaufs zur Führung des Schmiermittels zu dem Drehlager und zurück sein. Der Kanal kann z.B. ringförmig um die Rotationsachse einer Rotorwelle herum und insbesondere im Wesentlichen rotationssymmetrisch zu der Rotationsachse ausgebildet sein. Der Kanal kann z.B. einen Zuführabschnitt aufweisen oder in einen Zuführkanal münden, welcher das Schmiermittel zu einem konischen Abschnitt der Rotorwelle führt, welcher dazu ausgebildet ist, das von dem Kanal bereitgestellte flüssige Schmiermittel durch die kapillare Wirkung des Schmiermittels und die bei dem Rotieren der Welle wirkende Zentrifugalkraft zu dem Drehlager zu fördern.

Das den Kanal begrenzende Bauteil ist vorzugsweise im Wesentlichen scheibenförmig ausgebildet. Die durch das Dichtmittel verschlossene Seite des Kanals ist vorzugsweise einer Flachseite des scheibenförmigen Bauteils zugewandt. Das Dichtmittel erstreckt sich vorzugsweise nur über einen Teil der Grundfläche der Flachseite, nämlich vorzugsweise im Wesentlichen nur über den Bereich, in dem der Kanal ausgebildet ist. Wenn das Dichtmittel durch ein separates Dichtelement gebildet ist, ist es bevorzugt, wenn das Bauteil teilweise oder vollständig und insbesondere zumindest in seinem den Kanal begrenzenden Bereich aus einem Material besteht, das härter und/oder weniger elastisch ist als ein Material des Dichtelements. Der Kanal kann generell zumindest teilweise oder vollständig und insbesondere zumindest in seinem den Kanal begrenzenden Bereich aus einem metallischen Material bestehen. Das Bauteil kann einteilig oder mehrteilig ausgebildet sein.

Die Vorrichtung kann mehrere verschiedene Dichtmittel umfassen, die vorzugsweise verschiedene Längenabschnitte des Kanals verschließen, wobei jedes Dichtmittel jeweils gemäß der vorstehenden Beschreibung ausgebildet sein kann.

Weiterer Gegenstand der Erfindung ist ein Verfahren zur Herstellung einer Vorrichtung mit zumindest einem Kanal zum Führen eines gasförmigen oder flüssigen Betriebsmittels, welches umfasst, dass ein Bauteil mit einer Nut bereitgestellt wird und die Nutöffnung zur Bildung des Kanals mit einem langgestreckten, dem Verlauf der Nut folgenden Dichtmittel fluiddicht verschlossen wird. Mit dem Verfahren kann eine erfindungsgemäße Vorrichtung gemäß der vorliegenden Beschreibung hergestellt werden. Die in dieser Beschreibung im Hinblick auf die erfindungsgemäße Vorrichtung und deren Herstellung beschriebenen Vorteile und vorteilhaften Ausführungsformen stellen entsprechende Vorteile und vorteilhafte Ausführungsformen des Verfahrens dar. Zur Bereitstellung des Bauteils kann eine Nut, zum Beispiel durch ein materialentfernendes und insbesondere spanabhebendes Verfahren wie zum Beispiel Fräsen oder Drehen, in ein ursprüngliches Bauteil eingebracht werden.

Gemäß einem Beispiel, das nicht in den Schutzbereich der Ansprüche fällt, wird das Bauteil mit einem separaten Dichtelement oder mit einem Dichtstoff versehen, der zu einem separaten Dichtelement verfestigt wird. Das Dichtelement bzw. der Dichtstoff kann mit dem Bauteil materialschlüssig, kraftschlüssig und/oder formschlüssig verbunden werden. Das Dichtmittel kann zumindest bereichsweise in die Nut eingebracht werden, und zwar vorzugsweise durch die sich in Längsrichtung der Nut erstreckende Nutöffnung hindurch.

Gemäß einem weiteren Beispiel, das nicht in den Schutzbereich der Ansprüche fällt, wird das Bauteil mit einem Dichtstoff versehen, der mit dem Bauteil eine klebewirksame, materialschlüssige Verbindung eingeht und zu dem Dichtelement verfestigt wird bzw. aushärtet, wobei der Dichtstoff z.B. Silikon enthalten kann. Der Dichtstoff kann zumindest bereichsweise in die Nut eingebracht und/oder so auf den Nutrand aufgebracht werden, dass er die Nutöffnung zumindest bereichsweise überdeckt. Ein vorgefertigtes Dichtelement kann zur Bildung einer materialschlüssigen Verbindung mit dem Bauteil verklebt werden. Zum Beispiel kann ein elastisch verformbares selbstklebendes Dichtmittel wie zum Beispiel ein Klebeband verwendet werden, welches z.B., insbesondere beidseitig der Nut, auf den Nutrand aufgeklebt wird, so dass es die die Nutöffnung zumindest bereichsweise überdeckt. Das elastisch verformbare Dichtelement passt sich beim Aufkleben automatisch der Topographie des Nutrands an, so dass die Herstellung der Vorrichtung äußerst einfach möglich ist.

Gemäß einem weiteren Beispiel, das nicht in den Schutzbereich der Ansprüche fällt, kann das Dichtelement und/oder das Bauteil während der Herstellung der Vorrichtung elastisch und/oder plastisch verformt werden, insbesondere um eine kraftschlüssige oder formschlüssige Verbindung zwischen dem Dichtelement und dem Bauteil herzustellen. Dazu kann eine Kraft- oder Druckbeaufschlagung des Dichtelements erfolgen und das Dichtelement und das Bauteil können miteinander verspannt oder verklemmt werden. Das Dichtelement kann in die Nut eingepresst und/oder in der Nut eingeklemmt werden.

Gemäß einem weiteren Beispiel, das nicht in den Schutzbereich der Ansprüche fällt, kann zur Herstellung einer kraftschlüssigen Verbindung das Dichtelement z.B. elastisch verformt und in einem elastisch verformten Zustand bzw. unter elastischer Vorspannung mit dem Bauteil gekoppelt und an dem Bauteil zur Anlage gebracht werden. Beispielsweise kann das Dichtelement in einem elastisch verformten Zustand in der Nut eingeklemmt werden. Zur Herstellung einer kraftschlüssigen Verbindung kann auch eine plastische Verformung des Dichtelements erfolgen. Beispielsweise kann das Dichtelement dazu so gegen das Bauteil gepresst werden, dass sich das Dichtelement an dem Bauteil plastisch verformt und das Bauteil gleichzeitig dem Dichtelement zumindest geringfügig nachgibt und sich elastisch verformt. Dies kann derart erfolgen, dass nach der Druckbeaufschlagung die elastische Rückstellkraft bzw. das Zurückfedern des Bauteils das plastisch verformte Dichtelement so einklemmt und dabei vorzugsweise elastisch verformt, dass das Bauteil und das Dichtelement kraftschlüssig miteinander verbunden werden. Dazu kann z.B. das Dichtelement in die Nut eingebracht und mit der Nutwandung so verpresst werden, dass das Dichtelement anschließend in der Nut eingeklemmt ist. Das Dichtelement kann dabei zumindest teilweise aus einem metallischen Material bestehen und/oder kann durch ein Rohr oder ein Blechprofil gebildet sein, welches plastisch verformbar ist. Das Blechprofil kann im Zuge des Verpressens aufgespreizt werden, indem einander gegenüberliegende Schenkel des Blechprofils auseinander gedrückt werden.

Beispielsweise kann ein Rohr oder ein im Wesentlichen U-förmiges Blechprofil in die Nut eingelegt werden, wobei der Scheitel des U-förmigen Querschnitts in Richtung des Nutgrunds weist. Das Rohr oder das Blechprofil kann dann von außerhalb der Nut mit dem Bauteil verpresst werden, wobei das Rohr oder das U-förmige Profil nach dem Pressen an seiner im Bereich der Nutöffnung angeordneten Oberseite eckig gepresst ist und/oder sich seitlich gegen die Nutwandung abstützt.

Gemäß einem weiteren Beispiel, das nicht in den Schutzbereich der Ansprüche fällt, kann auch die Herstellung einer formschlüssigen Verbindung zwischen dem Dichtelement und dem Bauteil eine Verformung des Dichtelements oder des Bauteils umfassen. Das Dichtelement kann z.B. so plastisch verformt werden, dass das plastisch verformte Dichtelement mit dem Bauteil eine gewünschte Hinterschneidung bildet. Das Dichtelement kann auch in einem elastisch verformten Zustand so mit dem Bauteil gekoppelt werden, dass die elastische Rückstellung bzw. das Zurückfedern des Dichtelements zu der gewünschten Hinterschneidung führt.

Gemäß einem weiteren Beispiel, das nicht in den Schutzbereich der Ansprüche fällt, kann das Dichtelement zum Beispiel zumindest bereichsweise in die Nut eingebracht und dann so plastisch verformt werden, dass es in eine in der Nutwandung vorgesehene Aussparung des Bauteils eingreift. Ebenso kann das Dichtelement gegenüber der Nutöffnung ein Übermaß aufweisen und unter elastischer Verformung durch die Nutöffnung in die Nut eingebracht werden, wobei das darauf folgende elastische Zurückfedern des Dichtelements zu einem Eingreifen des Dichtelements in eine hinter der Nutöffnung angeordnete Aussparung führt. Das Verfahren kann auch so durchgeführt werden, dass durch eine elastische Verformung des Dichtelements und/der des Bauteils eine sowohl materialschlüssige als auch formschlüssige Verbindung zwischen dem Dichtelement und dem Bauteil geschaffen wird. Beispielsweise kann das Dichtelement so in die Nut eingebracht werden, dass es in eine in der Nutwandung vorgesehene Aussparung des Bauteils eingreift und unter einer elastischen Vorspannung an dem die Aussparung bildenden Abschnitt der Nutwandung anliegt.

Wie vorstehend beschrieben kann sowohl die Herstellung einer kraftschlüssigen Verbindung als auch die Herstellung einer formschlüssigen Verbindung zwischen dem Dichtelement und dem Bauteil eine plastische und/oder elastische Verformung des Dichtelements und/oder des Bauteils umfassen. Eine elastische Verformung kann mit geringerem Kraftaufwand erfolgen und erfordert, dass das Dichtelement und das Bauteil ausreichend genau aneinander angepasst sind, so dass sich die jeweilige Verbindung im Rahmen der jeweiligen elastischen Verformbarkeit herstellen lässt. Bei einer plastischen Verformung sind in der Regel höhere Kräfte notwendig, wobei eine weniger genaue Anpassung des Dichtelements und des Bauteils aneinander zulässig sein kann, da etwaige Abweichungen durch eine erhebliche plastische Verformung ausgeglichen werden können.

Gemäß der Erfindung
werden zur Bildung des Dichtmittels Wandungsabschnitte des Bauteils durch Verformung zur Anlage aneinander gebracht. Die Verformung erfolgt vorzugsweise plastisch und elastisch, so dass die plastisch verformten Wandungsabschnitte unter einer elastischen Vorspannung fluiddicht aneinander anliegen.

Nachfolgend wird die Erfindung anhand von Beispielen und anhand vorteilhafter Ausführungsformen unter Bezugnahme auf die beigefügten Figuren beschrieben. Es zeigen:
- Fig. 1: eine als Vakuumpumpe ausgebildete Vorrichtung gemäß einem Beispiel, das nicht in den Schutzumfang der Ansprüche fällt, in einer geschnittenen Darstellung,
- Fig. 2: den Ausschnitt A von Fig. 1 in einer vergrößerten Darstellung,
- Fig. 3 und 4: jeweils eine Vorrichtung gemäß einem weiteren Beispiel in einer geschnittenen Darstellung,
- Fig. 5: ein Bauteil zur Verwendung in einem Verfahren gemäß einer Ausführungsform der Erfindung in einer geschnittenen Darstellung, und
- Fig. 6: die aus dem Bauteil von Fig. 5 hergestellte Vorrichtung.

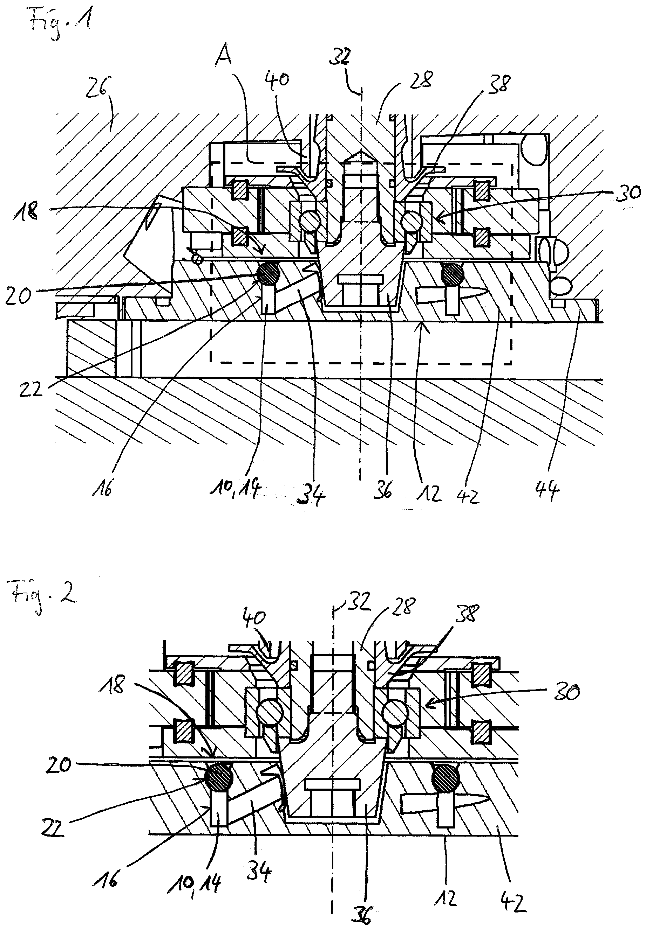

Fig. 1 zeigt eine Vakuumpumpe mit einem Gehäuse 26, in dem eine Rotorwelle 28 durch ein Wälzlager 30 um eine Rotationsachse 32 drehbar gelagert ist. Die Vakuumpumpe umfasst ein Bauteil 12, welches einen das Wälzlager 30 aufnehmenden Hohlraum des Gehäuses 26 nach Art eines Deckels verschließt. Das Bauteil 12 umfasst einen kreisscheibenförmigen Hauptabschnitt 42 und einen von dem Hauptabschnitt 42 radial abstehenden Kragenabschnitt 44, über den das Bauteil 12 an dem Gehäuse 26 befestigt ist.

Der Hauptabschnitt 42 des Bauteils 12 weist eine Nut 14 auf, die zu der dem Wälzlager 30 zugewandten Flachseite des Hauptabschnitts 42 hin offen ist und die ringförmig um die Rotationsachse 32 herum verläuft. Die Nut 14 ist von der Seite 18 der Nutöffnung her durch ein Dichtelement 20 fluiddicht verschlossen, so dass der von der Nutöffnung abgewandte Bereich der Nut 14 einen Kanal 10 bildet, der durch die Nutwandung 16 und das Dichtmittel 20 begrenzt ist und in dem ein in Fig. 1 und 2 nicht dargestelltes Schmiermittel aufgenommen ist. Das Dichtelement 20 ist durch einen elastomeren O-Ring gebildet.

Da die Nut 14 im Bereich ihrer Öffnung schmaler ist als das Dichtelement 20, wird der O-Ring bei der Herstellung der Vorrichtung elastisch verformt und durch die Nutöffnung hindurch in die Nut 14 hineineingepresst. Um das Einbringen des O-Rings zu erleichtern, weist die Nut 14 im Bereich ihrer Öffnung einen sich von der Nutöffnung in die Nut hinein verjüngenden Querschnitt auf. In Einsetzrichtung hinter der Verjüngung bildet die Nutwandung 16 auf beiden Seiten der Nut 14 eine Aussparung 22, in der der O-Ring 20 derart zu liegen kommt, dass er mit der Nutwandung 16 eine in Richtung zu der Nutöffnung hin wirksame Hinterschneidung bildet, welche ein unbeabsichtigtes Entfernen des O-Rings 20 aus der Nut 14 verhindert. Der O-Ring 20 weist gegenüber der Nut 14 im Bereich der Aussparung 22 ein Übermaß auf, so dass der O-Ring 20 durch die Nutwandung 16 dauerhaft elastisch verformt ist. Die elastische Rückstellkraft des O-Rings 20 bewirkt eine Vorspannung des O-Rings 20 gegenüber der Nutwandung 16, welche eine dichtende und kraftschlüssige Anlage des O-Rings 20 an der Nutwandung 16 bewirkt.

In dem Hauptabschnitt 42 ist ein Zuführkanal 34 ausgebildet, welcher den Kanal 10 fluidleitend mit dem Äußeren des Bauteils 12 verbindet und als Abgriff für das Schmiermittel dient. In einem geringen Abstand zu dem Ende des Zuführkanals 34 ist ein konischer Abschnitt 36 der Rotorwelle 28 angeordnet, dessen Durchmesser in axialer Richtung zu dem Wälzlager 30 hin größer wird. Das in dem Kanal 10 geführte Schmiermittel gelangt durch den Zuführkanal 34 zu dem konischen Abschnitt 36 der Rotorwelle 28 und wird von dieser durch kapillare Wirkung aufgenommen und infolge der bei dem Betrieb der Vakuumpumpe wirkenden Zentrifugalkraft dem größer werdenden Durchmesser des konischen Abschnitts 36 folgend zu dem Wälzlager 30 gefördert, wo es seine Schmierfunktion erfüllt.

Das Schmiermittel gelangt durch das Wälzlager 30 in axialer Richtung hindurch zu einem an der Rotorwelle 28 angeordneten Förderkragen 38, welcher von der Rotorwelle 28 radial absteht und einen sich in axialer Richtung von dem Wälzlager 30 weg betrachtet vergrößernden Außendurchmesser aufweist, so dass das Schmiermittel infolge der kapillaren Wirkung und der beim Betrieb der Vakuumpumpe wirkenden Zentrifugalkraft von dem Wälzlager 30 weg gefördert wird. An seinem Ende weist der Förderkragen einen sich im Wesentlichen in horizontaler Richtung erstreckenden Abschnitt auf, welcher einem statischen Abschnitt der Pumpe in geringem Abstand gegenüberliegt, der das Schmiermittel durch kapillare Wirkung zurück zu dem statischen Teil der Pumpe überträgt. Von dort wird das Schmiermittel in nicht näher dargestellter Weise zurück in den Kanal 10 geführt, so dass der Kanal 10 einen Teil eines Schmiermittelkreislaufs bildet.

Das Gehäuse 26 weist einen in axialer Richtung vorstehenden, rohrstutzenförmigen Fortsatz 40 auf, welcher den Förderkragen 38 hintergreift und mit diesem einen engen Spalt bildet, um die jenseits des Fortsatzes 40 gelegenen Pumpenkomponenten gegenüber dem Schmiermittelkreislauf abzudichten.

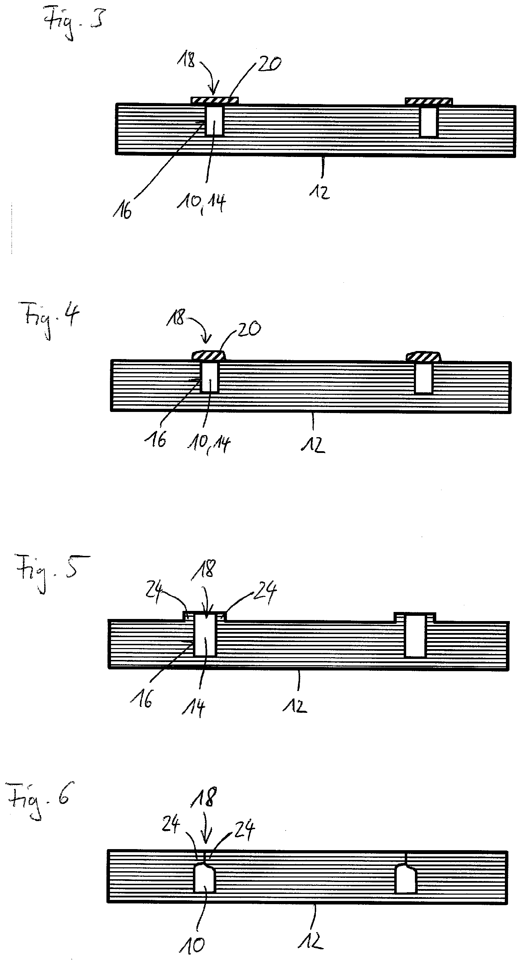

Fig. 3 zeigt eine Vorrichtung gemäß einem Beispiel, das nicht in den Schutzbereich der Ansprüche fällt, in einer senkrecht zu der Längsrichtung des Kanals 10 geschnittenen Darstellung. Die Vorrichtung umfasst ein scheibenförmiges Bauteil 12, in dem eine entlang ihrer Längserstreckung auf einer Seite 18 offene Nut 14 ausgebildet ist. Die Nut 14 ist zur Bildung des Kanals 10 durch ein Dichtelement 20 fluiddicht verschlossen, welches im vorliegenden Ausführungsbeispiel durch ein selbstklebendes Klebeband gebildet ist, welches mit dem Rand der Nut 14 beidseitig verklebt ist und die Öffnung der Nut 14 beidseitig überdeckt.

Fig. 4 zeigt eine Vorrichtung gemäß einem weiteren Beispiel, das nicht in den Schutzbereich der Ansprüche fällt, welche im Wesentlichen der in Fig. 3 gezeigten Ausgestaltung entspricht. Das Dichtmittel 20 ist durch einen in flüssiger Form auf das Bauteil 12 aufgebrachten und daraufhin fest gewordenen Dichtstoff gebildet, welcher beidseitig der Nut 14 mit dem Rand der Nut 14 eine klebewirksame Verbindung eingeht und die Nut 14 zur Bildung des Kanals 10 fluiddicht verschließt. Das Dichtelement 20 kann zum Beispiel eine fest gewordene Silikonraupe sein.

Fig. 5 zeigt ein Bauteil 12, welches sich zur Durchführung eines Verfahrens gemäß einer Ausführungsform der Erfindung eignet. Das Bauteil 12 umfasst eine entlang ihrer Längserstreckung zu der Seite 18 hin offene Nut 14, welche zum Beispiel durch Fräsen hergestellt sein kann. Im vorliegenden Ausführungsbeispiel sind Wandungsabschnitte 24 vorgesehen, die relativ zu den benachbarten Bereichen des Bauteils 12 erhaben ausgebildet sind, wodurch die Durchführung des Verfahrens erleichtert wird. Prinzipiell kann das Verfahren aber auch mit einem Bauteil 12 durchgeführt werden, dessen Nutrand mit den benachbarten Bereichen des Bauteils 12 eine ebene Oberfläche bildet.

Im Zuge des Verfahrens werden die Wandungsabschnitte 24 durch Druckbeaufschlagung so verformt, dass diese fluiddichtend aneinander zur Anlage kommen, so dass die Nut an ihrer offenen Seite verschlossen wird und ein fluiddicht verschlossener Kanal 10 (Fig. 6) entsteht.

Fig. 6 zeigt die aus dem Bauteil 12 von Fig. 5 auf diese Weise hergestellte Vorrichtung. Die Wandungsabschnitte 24 liegen unter einer Vorspannung aneinander an, die durch eine gegenseitige elastische Verformung der Wandungsabschnitte 24 bewirkt ist, und bilden dadurch ein Dichtmittel 20, welches den Kanal 10 fluiddicht verschließt.

### Bezugszeichenliste

- 10: Kanal
- 12: Bauteil
- 14: Nut
- 16: Nutwandung
- 18: Seite
- 20: Dichtmittel, Dichtelement
- 22: Aussparung
- 24: Wandungsabschnitt
- 26: Gehäuse
- 28: Rotorwelle
- 30: Wälzlager
- 32: Rotationsachse
- 34: Zuführkanal
- 36: konischer Abschnitt
- 38: Förderkragen
- 40: rohrstutzenförmiger Fortsatz
- 42: Hauptabschnitt
- 44: Kragenabschnitt

- A: Ausschnitt

## Patentansprüche

1. Vorrichtung mit zumindest einem Kanal (10) zum Führen eines gasförmigen oder flüssigen Betriebsmittels, insbesondere in einer Vakuumpumpe, wobei der Kanal (10) an einer Seite (18) durch wenigstens ein langgestrecktes, dem Verlauf des Kanals (10) folgendes Dichtmittel (20) fluiddicht verschlossen ist,
**dadurch gekennzeichnet, dass**
das Dichtmittel (20) durch Wandungsabschnitte (24) eines den Kanal (10) begrenzenden Bauteils (12) gebildet ist, die durch Verformung zur Anlage aneinander gebracht sind.

2. Vorrichtung nach Anspruch 1,
**dadurch gekennzeichnet, dass**
das Dichtmittel (20) und/oder der Kanal (10) ringförmig ausgebildet ist.

3. Vorrichtung nach Anspruch 1 oder 2,
**dadurch gekennzeichnet, dass**
der Kanal (10) wenigstens ein Längsende aufweist, wobei vorzugsweise der Kanal (10) an dem Längsende durch das Dichtmittel (20) fluiddicht verschlossen ist.

4. Vorrichtung nach einem der vorstehenden Ansprüche,
**dadurch gekennzeichnet, dass**
die Vorrichtung eine Vakuumpumpe oder eine Komponente einer Vakuumpumpe ist.

5. Verfahren zur Herstellung einer Vorrichtung mit zumindest einem Kanal (10) zum Führen eines gasförmigen oder flüssigen Betriebsmittels, insbesondere nach einem der vorstehenden Ansprüche, welches umfasst, dass ein Bauteil (12) mit einer Nut (14) bereitgestellt wird und die Nutöffnung zur Bildung des Kanals (10) mit einem langgestreckten, dem Verlauf der Nut (14) folgenden Dichtmittel (20) fluiddicht verschlossen wird,
**dadurch gekennzeichnet,**
**dass** zur Bildung des Dichtmittels (20) Wandungsabschnitte (24) des Bauteils (12) durch Verformung zur Anlage aneinander gebracht werden.

## Claims

1. An apparatus having at least one passage (10) for conducting a gaseous or a liquid operating medium, in particular in a vacuum pump, wherein the passage (10) is closed in a fluid-tight manner at a side (18) by at least one elongated sealing means (20) which follows the extent of the passage (10),
**characterized in that**
the sealing means (20) is formed by wall sections (24) of a component (12) which bounds the passage (10), said wall sections (24) being brought into contact with one another by deformation.

2. An apparatus in accordance with claim 1,
**characterized in that**
the sealing means (20) and/or the passage (10) is/are formed in ring shape.

3. An apparatus in accordance with claim 1 or claim 2,
**characterized in that**
the passage (10) has at least one longitudinal end, with preferably the passage (10) being closed in a fluid-tight manner at the longitudinal end by the sealing means (20).

4. An apparatus in accordance with any one of the preceding claims,
**characterized in that**
the apparatus is a vacuum pump or a component of a vacuum pump.

5. A method of manufacturing an apparatus having at least one passage (10) for conducting a gaseous or a liquid operating medium, in particular in accordance with any one of the preceding claims, said method comprising a component (12) having a groove (14) being provided and the groove opening being closed in a fluid-tight manner by an elongated sealing means (20), which follows the extent of the groove (14), to form the passage (10),
**characterized in that**
wall sections (24) of the component (12) are brought into contact with one another by deformation to form the sealing means (20).

## Revendications

1. Dispositif comportant au moins un canal (10) pour le guidage d'un fluide de fonctionnement gazeux ou liquide, en particulier dans une pompe à vide, le canal (10) étant scellé sur un côté (18) de manière étanche aux fluides par au moins un moyen d'étanchéité (20) allongé qui suit le trajet du canal (10),
**caractérisé en ce que**
le moyen d'étanchéité (20) est formé par des portions de paroi (24) d'un composant (12) délimitant le canal (10), qui sont amenés en appui mutuel par déformation.

2. Dispositif selon la revendication 1,
**caractérisé en ce que**
le moyen d'étanchéité (20) et/ou le canal (10) est/sont réalisé(s) en forme d'anneau.

3. Dispositif selon la revendication 1 ou 2,
**caractérisé en ce que**
le canal (10) présente au moins une extrémité longitudinale, le canal (10) étant de préférence scellé de manière étanche aux fluides à l'extrémité longitudinale par le moyen d'étanchéité (20).

4. Dispositif selon l'une des revendications précédentes,
**caractérisé en ce que**
le dispositif est une pompe à vide ou un composant d'une pompe à vide.

5. Procédé de réalisation d'un dispositif comportant au moins un canal (10) pour le guidage d'un fluide de fonctionnement gazeux ou liquide, en particulier selon l'une des revendications précédentes, qui consiste à fournir un composant (12) muni d'une rainure (14) et à sceller de façon étanche aux fluides l'ouverture de la rainure, destinée à former le canal (10), par un moyen d'étanchéité (20) allongé qui suit le trajet de la rainure (14),
**caractérisé en ce que**
pour former le moyen d'étanchéité (20), des portions de paroi (24) du composant (12) sont amenées en appui mutuel par déformation.
